# EUROPEAN PATENT APPLICATION

(11) **EP 4 712 171 A1**
(43) Date of publication of application: **18.03.2026**
(21) Application number: 24845895.2
(22) Date of filing: 16.07.2024
(51) Int. Cl.: H01M 4/66, B32B 15/08, C08K 3/22, H01M 10/0585, H01M 10/052, H01M 50/204

(54) **ELECTRODE CURRENT COLLECTOR AND LITHIUM SECONDARY BATTERY INCLUDING SAME**

(30) Priority: 27.07.2023 KR 20230098549; 10.07.2024 KR 20240091405
(71) Applicant: LG Energy Solution, Ltd., Seoul 07335 (KR)
(72) Inventor: KANG, Gyung Soo, Daejeon 34122 (KR); MOON, Jae Won, Daejeon 34122 (KR); YU, Hyung Kyun, Daejeon 34122 (KR)
(74) Representative: Hoffmann Eitle
(86) International application number: PCT/KR2024/010143
(87) International publication number: WO 2025/023592

(57) **Abstract**

An electrode current collector according to the present invention comprises a resin layer; a first metal layer disposed on one side of the resin layer; and a second metal layer disposed on the other side of the resin layer, wherein each of the first metal layer and the second metal layer independently has a thickness of 3.0 µm or less, and a ratio (T_{R}/T_{M}) of a thickness (T_{R}) of the resin layer to a thickness (T_{M}) of the first metal layer or the second metal layer is 1 to 24, and the electrode current collector has advantages in greatly contributing to improving the safety of the battery, reducing electrical resistance even with a structure in which a resin layer is interposed between metal layers, and improving weldability.

## Description

### TECHNICAL FIELD

The present invention relates to an electrode current collector and a lithium secondary battery comprising the same, and more particularly, to an electrode current collector capable of securing safety and improving battery performance at the same time, and a lithium secondary battery comprising the same.

### BACKGROUND ART

As technology development and demand for electric vehicles and energy storage systems (ESS) increase, the demand for batteries as an energy source is rapidly increasing, and research on batteries that meet various needs is being conducted.

In particular, in order to use batteries for a longer period of time with a single battery charge, it is necessary to increase battery capacity, and large-area electrode technology is essential for high capacity. However, in the process of increasing the electrode area, the performance of the electrode may decrease, and there is concern about thermal propagation due to thermal runaway to other electrodes in case of fire.

Lithium secondary batteries may experience rapid rise in electrode temperature due to thermal and physical factors. Thermal factors include overcharging or overload caused by misuse or malfunction of chargers, and physical factors include damage to a separator due to external impact, causing contact between negative and positive electrode materials, resulting in rapid rise in electrode temperature. If the electrode temperature rises rapidly in this way, the battery becomes very unstable due to reactions between an electrolyte and lithium or the generation of hydrogen and oxygen inside the battery. A solvent in the electrolyte may decompose to generate gas, and the decomposed gas of the solvent may ignite, leading to an explosion of the battery.

Conventional lithium secondary batteries include only a single metal layer as an electrode current collector, and specifically, an aluminum single metal layer is used as a positive electrode current collector, and a copper single metal layer is used as a negative electrode current collector. However, since such single metal layers have very high electrical and thermal conductivity, the time taken to reach a high temperature instantaneously in the abnormal behavior of the battery is very short, and there is concern about thermal propagation due to thermal runaway.

Accordingly, by using an electrode collector (metallized film) that includes a resin layer, sandwiched between two metal layers instead of the conventional electrode collector, a weight may be reduced compared to the electrode collector made of metal, which may significantly improve energy density per weight and may arise a short circuit between the electrodes in case of fire, thereby improving safety.

However, in the case of the electrode current collector, which is the metallized film, there is a problem in that electrical resistivity may be high because of a structure with a resin layer interposed in the middle thereof compared to the existing pure metal electrode current collector, so research on a method to minimize the loss of electrical resistivity is required.

### DISCLOSURE OF THE INVENTION

### TECHNICAL PROBLEM

The present invention is to solve the above problems and to provide an electrode current collector and a lithium secondary battery including the same, the electrode current collector including particles having both conductor and insulator properties in a resin layer of a metallized film current collector, thereby functioning as a conductor during charging and discharging of the battery to improve electrical conductivity and thereby improve the output characteristics of the battery, and having not only excellent stability from fire and thermal runaway prevention effects by maintaining the insulating properties of the resin layer in the case where a thermal event occurs, but also lightweight to improve energy density.

### TECHNICAL SOLUTION

[1] An electrode current collector according to an embodiment of the present invention comprises: a resin layer; a first metal layer disposed on one side of the resin layer; and a second metal layer disposed on the other side of the resin layer, wherein each of the first metal layer and the second metal layer independently has a thickness of 3.0 µm or less, a ratio (T_{R}/T_{M}) of a thickness (T_{R}) of the resin layer to a thickness (T_{M}) of the first metal layer or the second metal layer is 1 to 24, and the resin layer comprises a metal oxide represented by Formula 1 below

   [Formula 1] M1ₓM2_{y}O_{z}

   In Formula 1, M1 is one or more post-transition metals selected from the group consisting of Al, Ga, In, Sn, Pb, and Bi, M2 is one or more transition metals selected from the group consisting of Ti, Zr, Nb, Ru, Hf, Cr, Mo, Ni, Co, V, Y, and Zn, 0≤x≤4, 0≤y≤4 and 1≤z≤8, x and y are not 0 at the same time, and x, y and z are defined considering oxidation numbers of M1 and M2 and an oxidation number of oxygen.
[2] In [1] above, the metal oxide may comprise one or more selected from the group consisting of lead oxide (PbO), ruthenium dioxide (RuO₂), alumina (Al₂O₃), zirconia (ZrO₂), bismuth ruthenic acid (Bi₂Ru₂O₇), and bismuth iridic acid (Bi₂Ir₂O₇).
[3] In [1] and/or [2], the metal oxide may be 10 wt% to 60 wt% based on a total weight of the resin layer.
[4] In any one or more of [1] to [3] above, the metal oxide may have an average particle diameter of 0.5 µm to 2.0 µm.
[5] In any one or more of [1] to [4] above, the resin layer may further comprise one or more selected from the group consisting of a polyester-based resin, an epoxy-based resin, a phenol-based resin, a melamine-based resin, an urethane-based resin, a silicone-based resin, a vinyl acetate-based resin, a rubber-based resin, an acrylic resin, and a polyether urethane-based resin.
[6] In any one or more of [1] to [5] above, each of the first metal layer and the second metal layer may independently comprise one or more selected from the group consisting of copper, stainless steel, aluminum, nickel, titanium, heat-treated carbon, and an aluminum-cadmium alloy.
[7] In any one or more of [1] to [6] above, the resin layer may have a thickness of 2 µm to 12 µm.
[8] In any one or more of [1] to [7] above, each of the first metal layer and the second metal layer may independently have a thickness of 0.2 µm to 2.5 µm.
[9] In any one or more of [1] to [8] above, the resin layer may have a thickness deviation of 10% or less.
[10] In any one or more of [1] to [9] above, each of the first metal layer and the second metal layer may independently have a thickness deviation of 5% or less.
[11] A lithium secondary battery according to another embodiment of the present invention comprises an electrode assembly having a structure in which multiple electrodes and multiple separators are alternately laminated, wherein the electrode comprises an electrode current collector and an electrode active material layer disposed on the electrode current collector, and at least one of the multiple electrode current collectors is the electrode current collector described above.
[12] A battery module according to further another embodiment of the present invention comprises a plurality of the lithium secondary batteries described above.

### ADVANTAGEOUS EFFECTS

The electrode current collector according to the present invention includes a resin layer between two metal layers, and includes a metal oxide in the resin layer, that may have both conductor and insulator properties depending on the surrounding environment, so that the flow of current may be improved even within the resin layer during the operation of the battery, and thus has the advantage of reducing the electrical resistivity of a metallized film, and also has the advantage of ensuring safety if a thermal event occurs, due to the insulating properties of the resin layer of the metallized film.

Further, the electrode current collector may also have the advantage of possibly improving the problem of poor weldability with an electrode tab during welding due to the interposed resin layer, because of the metal component included in the metal oxide.

In addition, the lithium secondary battery according to the present invention may improve safety by delaying thermal propagation in case of actual fire, as well as mechanical safety against foreign substances such as nail penetration, because the metal oxide included in the resin layer of the electrode current collector functions as an insulator when an event occurs, to maintain the insulation of the resin layer.

In addition, since an electrode current collector with a structure in which a relatively light resin layer and a metal layer disposed as a thin film on the resin layer, is included compared to an electrode collector made of only metal, the weight of the battery may be reduced, and energy density per weight may be improved.

### BRIED DESCRIPTION OF DRAWINGS

FIG. 1 is an example of a cross-sectional view of an electrode current collector according to an embodiment of the present invention.
FIG. 2 is another example of a cross-sectional view of an electrode current collector according to an embodiment of the present invention.

### BEST MODE FOR CARRYING OUT THE INVENTION

The advantages and features of the present invention, and the methods for achieving them, will become clear with reference to the embodiments described in detail below together with the accompanying drawings. However, the present invention is not limited to the embodiments described below, but can be implemented in various different forms, and the embodiments are provided only to make the disclosure of the present invention complete and to fully inform a person having ordinary skill in the art to which the present invention belongs of the scope of the invention, and the present invention is defined only by the scope of the claims. Like reference numerals refer to like elements throughout the specification.

Unless otherwise defined, all terms (including technical and scientific terms) used in this specification may be used with a meaning that can be commonly understood by a person of ordinary skill in the art to which the present invention belongs. In addition, terms defined in commonly used dictionaries shall not be ideally or excessively interpreted unless explicitly specifically defined.

The terminology used in this specification is for the purpose of describing embodiments and is not intended to limit the invention. In this specification, the singular also includes the plural unless specifically stated otherwise. The terms "comprises" and/or "comprising" as used in the specification do not exclude the presence or addition of one or more other components in addition to the components mentioned.

In this specification, if a part is said to include a certain component, this does not mean that other components are excluded, but rather that other components may be included, unless otherwise specifically stated.

In this specification, the term "A and/or B" means A, or B, or A and B.

In this specification, "%" means wt% unless otherwise explicitly stated.

In this specification, an "average particle diameter" means a particle diameter corresponding to the average value of weight percentage in a particle size distribution curve, and unless otherwise explicitly indicated, means wt%. The average particle diameter may be measured by cutting a sample of a pouch-type battery case and using an electron microscope or an optical microscope.

In this specification, each of the electrode current collector, lithium secondary battery and battery module includes one or more of the technical features and/or technical configurations described below, and the technical features and/or technical configurations may be combined in various ways.

### Electrode Current Collector

An electrode current collector according to an embodiment of the present invention comprises: a resin layer; a first metal layer disposed on one side of the resin layer; and a second metal layer disposed on the other side of the resin layer.

In addition, each of the first metal layer and the second metal layer independently has a thickness of 3.0 µm or less, a ratio (T_{R}/T_{M}) of a thickness (T_{R}) of the resin layer to a thickness (T_{M}) of the first metal layer or the second metal layer is 1 to 24, and the resin layer comprises a metal oxide represented by Formula 1 below.

[Formula 1] M1ₓM2_{y}O_{z}

In Formula 1, M1 is one or more post-transition metals selected from the group consisting of Al, Ga, In, Sn, Pb, and Bi, M2 is one or more transition metals selected from the group consisting of Ti, Zr, Nb, Ru, Hf, Cr, Mo, Ni, Co, V, Y, and Zn, 0≤x≤4, 0≤y≤4 and 1≤z≤8, x and y are not 0 at the same time, and x, y and z are defined considering oxidation numbers of M1 and M2 and an oxidation number of oxygen.

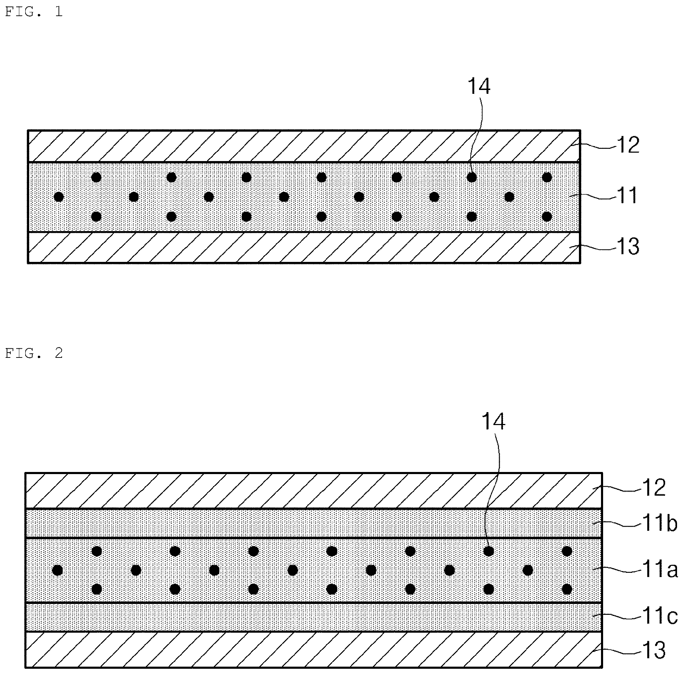

Hereinafter, the electrode current collector according to the present invention will be explained with reference to FIGS. 1 and 2.

FIGS. 1 and 2 are cross-sectional views of electrode current collectors according to embodiments of the present invention.

Referring to FIG. 1, an electrode current collector according to an embodiment of the present invention includes a resin layer (11), a first metal layer (12) disposed on one side of the resin layer, and a second metal layer (13) disposed on the other side of the resin layer, and the resin layer includes a metal oxide (14).

Otherwise, as in FIG. 2, a resin layer may have a structure of total three layers between the first metal layer (12) and the second metal layer (13), and the structure may include a first resin layer (11b) disposed to be in contact with the second metal layer (12) among the resin layers, a third resin layer (11c) disposed to be in contact with the second metal layer (13), and the metal oxide (14) included in the first resin layer (11a) positioned at the innermost side.

A conventional lithium secondary battery includes only a single metal layer as an electrode current collector, and specifically, an aluminum single metal layer is used as a positive electrode current collector, and a copper single metal layer is used as a negative electrode current collector. However, such a single metal layer has very high electrical and thermal conductivity, so the time taken to reach a high temperature instantaneously in the abnormal behavior of the battery is very short, and there is a concern about thermal propagation due to thermal runaway, and there is also a high risk of explosion in the event of penetration damage by a needle-shaped object.

Accordingly, by using an electrode collector including a resin layer disposed between two metal layers instead of the conventional electrode collector, the weight may be reduced compared to the electrode collector made of a metal, which may significantly improve energy density per weight, and in case of fire, thermal propagation may be delayed due to the insulating properties of the resin layer between the metal layers, and the risk of explosion may be reduced even in case of penetration damage.

However, since the electrode current collector has a structure in which a resin layer is disposed between metal layers, the current flow path is to be reduced compared to the conventional current collector, and an increase in electrical resistance is inevitable as a result, causing many problems during welding with an electrode tab.

To solve the problems, the insertion of a metal powder into the resin layer may be considered to improve electrical conductivity and weldability. However, in this case, if a small amount is injected or small particles are injected, no improvement effect is observed. In addition, if the metal powder is injected at a level that improves electrical conductivity and weldability, the characteristics of the current collector, which is a metallized film for exhibiting delaying effect of thermal propagation, may not be achieved, and there is a problem of exhibiting inferior stability to penetration damage.

Furthermore, in case of injecting carbon materials such as carbon black, graphene, and graphite as conductive materials used in an electrode to improve electrical conductivity, it is difficult to expect safety as with injecting a metal powder, and there is a problem that weldability is not improved at all.

Accordingly, the inventors of the present invention designed an electrode current collector that may solve the problem of electrical resistivity while also improving weldability by improving and increasing the flow path of current by inserting a metal oxide into the resin layer of the electrode current collector, which is a metallized film, and ultimately secure thermal propagation delay and safety against penetration damage, that the metallized film is intended to achieve.

### Metal Oxide

According to an embodiment of the present invention, the electrode current collector is characterized in that a metal oxide is included in the resin layer. The resin layer disposed in the middle of the electrode current collector is not electrically conductive and thus has a high electrical resistivity, which may be a factor hindering the performance of the function of the electrode current collector. However, by including the metal oxide in the resin layer, the dielectric properties of the metal oxide may be shown to function as a conductor in a situation where current flows, and through this, high electrical resistivity due to the resin layer may be reduced.

In addition, if a battery is damaged by external impact, especially if the battery is penetrated by a needle-shaped object, the resin layer may help to delay thermal propagation by preventing electrical shorts of the electrode because the metal oxide itself is an insulator.

The metal oxide may be, for example, represented by Formula 1 below.

[Formula 1] M1ₓM2_{y}O_{z}

In Formula 1, M1 is one or more post-transition metals selected from the group consisting of Al, Ga, In, Sn, Pb, and Bi, M2 is one or more transition metals selected from the group consisting of Ti, Zr, Nb, Ru, Hf, Cr, Mo, Ni, Co, V, Y, and Zn, 0≤x≤4, 0≤y≤4 and 1≤z≤8, x and y are not 0 at the same time, and x, y and z may be defined considering oxidation numbers of M1 and M2 and an oxidation number of oxygen.

Specifically, M1 may be Al, Ga, In, Sn, Pb, or Bi, and M2 may be Ti, Zr, Nb, Ru, Hf, Cr, Mo, Ni, Co, V, Y, or Zn.

Preferably, the metal oxide may include one or more selected from the group consisting of lead oxide (PbO), ruthenium dioxide (RuO₂), alumina (Al₂O₃), zirconia (ZrO₂), bismuth ruthenic acid (Bi₂Ru₂O₇), and bismuth iridic acid (Bi₂Ir₂O₇).

Meanwhile, as described above, if the metal oxide is replaced with a metal or a carbon material, it may be difficult to achieve the effect of replacing a single metal film with a metallized film. That is, if the resin layer, which is the middle layer of the metallized film, contains relatively highly conductive materials such as a carbon material or a metal rather than the metal oxide, the possibility of a short circuit occurring when the current collector is damaged increases, causing explosion problems or thermal propagation acceleration problems during penetration, and although the probability is low, a problem of dendrite growth in which lithium is precipitated due to the generation of leakage current may occur. Therefore, the material included as a filler in the resin layer needs to be a metal oxide.

The metal oxide may be included in an amount of 10 wt% to 60 wt% based on the total weight of the resin layer, preferably 15 wt% or more, 20 wt% or more, or 25 wt% or more, and preferably 55 wt% or less, or 50 wt% or less. If the metal oxide is included in an amount within the above range, the effect of improving the current flow path may be maximized, while not adversely affecting the weight reduction improvement, which may occur in case of including an excessive amount, or rather preventing problems such as an electrical short due to external impact or penetration of a needle-shaped object, similar to the conventional electrode current collector. In addition, it may be preferable to include at least 10 wt% in order to exhibit the effect of improving the current flow path.

In addition, the metal oxide may have an average particle diameter of 0.5 µm to 2.0 µm, preferably 0.7 µm or more, 1.0 µm or more, or 1.2 µm or more, and preferably 2.0 µm or less, 1.8 µm or less, or 1.5 µm or less. The average particle diameter may be appropriately selected in consideration of the thickness of the resin layer, and may be selected in consideration of the type and density of the material of the applied metal oxide.

### Thickness and Thickness Ratio of Metal Layer

According to an embodiment of the present invention, in the electrode current collector, the thickness of each of the first metal layer and the second metal layer is independently 3.0 µm or less, and a ratio (T_{R}/T_{M}) of the thickness (T_{R}) of the resin layer to the thickness (T_{M}) of the first metal layer or the second metal layer is 1 to 24.

In the case where the above metal oxide is included in the resin layer, in order to obtain effects such as weight reduction, improved safety, and reduced resistivity of a battery, the thickness of the metal layer and the thickness ratio of the resin layer and the metal layer are required to be considered together. Even if the metal oxide is included, if the thickness of the metal layer or the thickness ratio of the layers is not properly controlled, it is difficult to normally achieve the target effects through the introduction of the metal oxide.

Accordingly, the electrode current collector according to an embodiment of the present invention is characterized in that each of the metal layers positioned on both sides of the resin layer has a thickness of 3.0 µm or less. The metallized film, that is, the electrode current collector of the present invention, may be expected to improve energy density through weight reduction without affecting the original function of the current collector. However, if the thickness of each metal layer exceeds 3.0 µm, it is difficult to expect such the effect, and since the possibility of thermal propagation due to thermal runaway increases as the thickness of the metal layer becomes thicker, it is preferable that the thickness of the metal layer does not exceed 3.0 µm in order to ensure improved safety.

The thickness of each of the metal layers may preferably be 0.2 µm or more, 0.5 µm or more, 0.7 µm or more, and more preferably 1.0 µm or more, 2.5 µm or less, 2.3 µm or less, or 2.0 µm or less. In this case, the effect described above may be more easily achieved.

In addition, the metal oxide may be included in the resin layer to improve the current flow path, but in order to achieve the effect, the thickness ratio of the metal layer and the resin layer is required to satisfy 1 to 24. If the thickness ratio is less than 1, the resin layer becomes too thin, making it difficult to ensure safety in case of arising a short circuit due to external impact or penetration by a needle-shaped object. In addition, if the thickness ratio exceeds 24, there is a concern that the resin layer becomes too thick, lowering energy density, and even if the metal oxide is introduced, the current flow path is not improved, making it impossible to obtain the effect of reducing resistivity.

The thickness ratio of the resin layer and the metal layer may have a lower limit of 1 or more, preferably 1.5 or more, 2 or more, 2.5 or more, 3 or more, 3.5 or more, or 4 or more, and an upper limit of 24 or less, preferably 23 or less, 22 or less, 21 or less, or 20 or less.

### Resin Layer

According to an embodiment of the present invention, the resin layer (11) is a matrix resin that prevents abnormal thermal propagation between the electrode current collector and the electrode active material layer, and may also play a role in reducing the weight of the electrode current collector and alleviating external impact.

As described above, the resin layer (11) includes the metal oxide, and since the explanation on the metal oxide is as described above, the description of the same will be omitted.

The resin layer (11) may further include, for example, one or more selected from the group consisting of a polyester-based resin, an epoxy-based resin, a phenol-based resin, a melamine-based resin, an urethane-based resin, a silicone-based resin, a vinyl acetate-based resin, a rubber-based resin, an acrylic resin, and a polyether urethane-based resin.

Specifically, the resin layer (11) may include one or more selected from the group consisting of polyimide (PI), polyethylene terephthalate (PET), polybutylene terephthalate (PBT), polyethylene naphthalate (PEN), polyacrylonitrile (PAN), polyethylene (PE), polyamide (PA), and polypropylene (PP). In addition, the resin layer (11) may be a thermosetting resin or a photocurable resin, and preferably may include an ultraviolet-curable resin.

If necessary, the resin layer (11) may include a photoinitiator such as a benzoin compound, an acetophenone compound, an acylphosphine oxide compound, a titanocene compound, a thioxanthone compound, or a peroxide compound, or a photoinitiator such as an amine or a quinone, and may additionally include a curing accelerator such as an amine- based, imidazole-based, phosphorus-based, boron-based, or phosphorus-boron-based curing accelerator. In addition, a thermal initiator such as a peroxide including azobisnitrile, benzoyl peroxide, or acetyl peroxide, may be included.

According to an embodiment of the present invention, the resin layer (11) may have a thickness of 2 µm to 12 µm, preferably a lower limit of 3 µm or more, 4 µm or more, 5 µm or more, or 6 µm or more, and preferably an upper limit of 11 µm or less, 10 µm or less, 9 µm or less, or 8 µm or less. If the thickness of the resin layer (11) is applied within the range, effects such as a function of preventing abnormal thermal propagation, a function of reducing the weight of the electrode current collector, a function of alleviating external impact, and a function of preventing an increase in the overall thickness of the battery may be expected.

In addition, the resin layer (11) may have a thickness deviation of 10% or less. It may be preferable to control the resin layer thickness deviation to 10% or less, and in this case, the joint surface of the resin layer and the metal layer may be densely joined without a gap, and problems such as fire occurring due to short circuit between the metal layers caused by damage due to external impact or penetration of a needle-shaped object may be prevented.

### Metal Layer

According to an embodiment of the present invention, the first metal layer (12) and/or the second metal layer (13) may include one or more selected from the group consisting of copper, stainless steel, aluminum, nickel, titanium, heat-treated carbon, and an aluminum-cadmium alloy. Although not particularly limited, if forming a positive electrode current collector, it is preferable to include aluminum, and if forming a negative electrode current collector, it is preferable to include copper.

Since the thickness of each of the metal layers has been described above, the description on the same will be omitted.

In addition, the first metal layer (12) and/or the second metal layer (13) may form fine irregularities on the surface to strengthen the bonding strength with an electrode combination layer, and may be used in various forms such as films, sheets, foils, nets, porous bodies, foams, and nonwoven fabrics.

However, even in the case of forming fine irregularities on the surface, it may be preferable that the thickness deviation of the metal layer may be 5% or less. By forming irregularities on the surface, the adhesion to the electrode combination layer may be improved, but if the deviation between the highest and lowest thicknesses of the irregularities exceeds 5% due to the formation of irregularities, problems such as fire may occur due to short circuits between the metal layers caused by damage from external impact or penetration by a needle-shaped object.

The electrode current collector (10) according to an embodiment of the present invention includes the resin layer (11) and the first metal layer (12) and the second metal layer (13) on both sides thereof, and the resin layer (11) includes the metal oxide (14). The metal oxide may be inserted into the resin layer by a method such as introducing a polymer, which is the material of the resin layer, in a molten state and extruding together. The metal layer may be formed on the resin layer by, for example, a physical vapor deposition method. There is no particular limitation on the method as long as it is capable of manufacturing the electrode current collector of the present invention, that satisfies the conditions described above, but in order to form the metal layer as thin as possible, the formation by a physical vapor deposition method may be preferable.

### Lithium Secondary Battery

A lithium secondary battery according to the present invention includes the electrode current collector of the present invention described above.

Specifically, the lithium secondary battery includes an electrode assembly having a structure in which a plurality of electrodes and a plurality of separators are alternately laminated, the electrode includes an electrode current collector and an electrode active material layer disposed on the electrode current collector, and at least one of the plurality of electrode current collectors is the electrode current collector of the present invention described above.

More specifically, a lithium secondary battery according to the present invention includes an electrode assembly in which a positive electrode, a separator, and a negative electrode are sequentially laminated, the separator being disposed between the positive electrode and the negative electrode, wherein the positive electrode includes a positive electrode current collector and a positive electrode active material layer laminated on the positive electrode current collector, the negative electrode includes a negative electrode current collector and a negative electrode active material layer laminated on the negative electrode current collector, and at least one of the positive electrode current collector and the negative electrode current collector is the electrode current collector of the present invention described above.

### Positive Electrode

According to an embodiment of the present invention, the positive electrode may apply the metallized film as described above as a positive electrode current collector, and may include the positive electrode current collector and a positive electrode active material layer disposed thereon.

The positive electrode active material layer may optionally include a conductive material and a binder, as needed, together with the positive electrode active material.

The positive electrode active material is a material capable of causing an electrochemical reaction, and is a lithium transition metal oxide, which contains two or more transition metals, for example, layered compounds such as lithium cobalt oxide (LiCoO₂), and lithium nickel oxide (LiNiO₂), substituted with one or more transition metals; lithium manganese oxide substituted with one or more transition metals; lithium nickel-based oxides represented by Formula LiNi_{1-y}M_{y}O₂ (where M = Co, Mn, Al, Cu, Fe, Mg, B, Cr, Zn or Ga and containing one or more of the elements, 0.01≤y≤0.7); lithium nickel cobalt manganese composite oxides represented by Li_{1+z}NiMn_{c}Co_{1-(b+c+d)}M_{d}O₍₂₋ₑ₎Aₑ (where -0.5≤z≤0.5, 0.1≤b≤0.8, 0.1≤c≤0.8, 0≤d≤0.2, 0≤e≤0.2, b+c+d<1, M = Al, Mg, Cr, Ti, Si or Y, and A = F, P or Cl) such as Li_{1+z}Ni_{1/3}CO_{1/3}Mn_{1/3}O₂ and Li_{1+z}Ni_{0.4}Mn_{0.4}Co_{0.2}O₂; olivine-based lithium metal phosphates represented by Formula Li₁₊ₓM_{1-y}M'_{y}PO_{4-z}X_{z} (where M = transition metal, preferably Fe, Mn, Co or Ni, M' = Al, Mg or Ti, X = F, S or N, -0.5≤x≤+0.5, 0≤y≤0.5, and 0≤z≤0.1), without limitation. The positive electrode active material may be included in 80 wt% to 99 wt%, preferably 90 wt% to 98 wt% based on the total weight of the positive electrode active material layer.

The conductive material is used to provide conductivity to the electrode, and may be used without specific limitations as long as it does not cause chemical changes in the battery to be formed and has electronic conductivity. Specific examples include graphite such as natural graphite and artificial graphite; carbon-based materials such as carbon black, acetylene black, Ketjen black, channel black, furnace black, lamp black, thermal black, and carbon fiber; metal powders or metal fibers of copper, nickel, aluminum, silver or the like; conductive tubes such as carbon nanotubes; conductive whiskers of zinc oxide, potassium titanate or the like; conductive metal oxides such as titanium oxide; or conductive polymers such as polyphenylene derivatives or the like, and one alone or a mixture of two or more thereof may be used. The conductive material may be included in 0.01 wt% to 10 wt%, preferably 0.1 wt% to 9 wt%, more preferably 0.1 wt% to 5 wt% based on the total weight of the positive electrode active material layer.

The binder serves to improve the adhesion among positive electrode active material particles and the adhesion strength between the positive electrode active material and the current collector. Specific examples include polyvinylidene fluoride (PVDF), a polyvinylidene fluoride-hexafluoropropylene copolymer (PVDF-co-HFP), polyvinyl alcohol, polyacrylonitrile, polymethyl methacrylate, carboxymethyl cellulose (CMC), starch, hydroxypropyl cellulose, regenerated cellulose, polyvinyl pyrrolidone, polytetrafluoroethylene, polyethylene, polypropylene, an ethylene-propylene-diene polymer (EPDM), a sulfonated-EPDM, styrene butadiene rubber (SBR), fluoro-rubber, polyacrylic acid, polymers in which hydrogen atoms are substituted with Li, Na, or Ca, or various copolymers thereof, and one alone or a mixture of two or more thereof may be used. The binder may be included in 1 wt% to 30 wt%, preferably 1 wt% to 20 wt%, and more preferably 1 wt% to 10 wt% relative to the total weight of the positive electrode active material layer.

The positive electrode may be manufactured according to the conventional method for manufacturing a positive electrode, except that the positive electrode active material is used. Specifically, a positive electrode slurry composition prepared by dissolving or dispersing the positive electrode active material and optionally a binder, a conductive material, and a dispersant in a solvent as needed is applied onto a positive electrode current collector, and then dried and rolled to manufacture the positive electrode.

The solvent may be a solvent generally used in the relevant technical field, and may include dimethyl sulfoxide (DMSO), isopropyl alcohol, N-methylpyrrolidone (NMP), dimethyl formamide (DMF), acetone, or water, and one alone or a mixture of two or more thereof may be used. The amount of the solvent used is sufficient to dissolve or disperse the positive electrode active material, conductive material, binder, and dispersant, considering the coating thickness and preparation yield of the slurry, and to have a viscosity that may exhibit excellent thickness uniformity if applied for the subsequent manufacturing of the positive electrode.

Alternatively, the positive electrode may be manufactured by casting the positive electrode slurry composition on a separate support, and then laminating the resulting film on a positive electrode current collector by peeling it off from the support.

### Separator

The separator separates the negative electrode and the positive electrode and provides a passage for lithium ions to move, and any separator commonly used in lithium secondary batteries may be used without specific limitations. In particular, a separator having low resistance to ion movement of an electrolyte and excellent electrolyte impregnation capacity is preferable. Specifically, a porous polymer film, for example, a porous polymer film made of a polyolefin polymer such as an ethylene homopolymer, a propylene homopolymer, an ethylene/butene copolymer, an ethylene/hexene copolymer, and an ethylene/methacrylate copolymer, or a laminated structure of two or more layers thereof, may be used. In addition, a general porous nonwoven fabric, for example, a nonwoven fabric made of high-melting-point glass fibers, polyethylene terephthalate fibers or the like may be used. In addition, a coated separator containing a ceramic component or a polymer material may be used to secure heat resistance or mechanical strength, and may optionally be used in a single-layer or multi-layer structure.

### Electrolyte

In addition, the electrolyte used in the present invention may include, but is not limited to, organic liquid electrolytes, inorganic liquid electrolytes, solid polymer electrolytes, gel-type polymer electrolytes, solid inorganic electrolytes, and molten inorganic electrolytes that may be used in the manufacture of a lithium secondary battery.

Specifically, the electrolyte may include an organic solvent and a lithium salt.

As the organic solvent, any solvent that may act as a medium through which ions involved in the electrochemical reaction of the battery may move, may be used without specific limitations. Specifically, the organic solvent may include ester-based solvents such as methyl acetate, ethyl acetate, γ-butyrolactone and ε-caprolactone; ether-based solvents such as dibutyl ether and tetrahydrofuran; ketone-based solvents such as cyclohexanone; aromatic hydrocarbon-based solvents such as benzene and fluorobenzene; carbonate-based solvents such as dimethyl carbonate (DMC), diethyl carbonate (DEC), methyl ethyl carbonate (MEC), ethyl methyl carbonate (EMC), ethylene carbonate (EC) and propylene carbonate (PC); alcohol-based solvents such as ethyl alcohol and isopropyl alcohol; nitriles such as R-CN (R is a linear, branched, or cyclic hydrocarbon group having 2 to 20 carbon atoms and may include a double-bonded, an aromatic ring or an ether bond); amides such as dimethylformamide; dioxolanes such as 1,3-dioxolane; and sulfolanes. Among them, a carbonate-based solvent is preferable, and a mixture of a cyclic carbonate (e.g., ethylene carbonate, propylene carbonate or the like) having high ionic conductivity and high dielectric constant that may improve the charge/discharge performance of the battery and a low-viscosity linear carbonate compound (e.g., ethyl methyl carbonate, dimethyl carbonate, diethyl carbonate or the like) is more preferable.

The above lithium salt may be used without any specific limitations as long as it is a compound capable of providing lithium ions used in a lithium secondary battery. Specifically, the anion of the lithium salt may be one or more selected from the group consisting of F⁻, Cl⁻, Br⁻, I⁻, NO₃⁻, N(CN)₂⁻, BF₄⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₃)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻, and the lithium salt may be LiPF₆, LiClO₄ LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)_{2.} LiCl, LiI, LiB(C₂O₄)₂ or the like. The concentration of the lithium salt may be within the range of 0.1 M to 4.0 M, preferably 0.5 M to 3.0 M, and more preferably 1.0 M to 2.0 M. If the concentration of the lithium salt is within the range, the electrolyte may exhibit excellent electrolyte performance because it has appropriate conductivity and viscosity, and lithium ions may move effectively.

In addition to the electrolyte components, the electrolyte may further include one or more additives such as, for example, a haloalkylene carbonate compound such as difluoroethylene carbonate, pyridine, triethylphosphite, triethanolamine, a cyclic ether, ethylene diamine, n-glyme, hexaphosphoric acid triamide, nitrobenzene derivatives, sulfur, quinone imine dyes, N-substituted oxazolidinones, N,N-substituted imidazolidines, ethylene glycol dialkyl ethers, ammonium salts, pyrrole, 2-methoxy ethanol, and aluminum trichloride, for the purpose of improving the life characteristics of the battery, suppressing the decrease in battery capacity, and improving the discharge capacity of the battery. In this case, the additive may be included in an amount of 0.1 to 10.0 wt% based on the total weight of the electrolyte.

### Negative Electrode

The negative electrode includes a negative electrode current collector and a negative electrode active material layer positioned on the negative electrode current collector.

According to an embodiment of the present invention, the negative electrode may apply a metallized film as described above as a negative electrode current collector, and may include a negative electrode current collector and a negative electrode active material layer positioned on it.

The negative electrode active material layer optionally includes a binder and a conductive material together with the negative electrode active material.

As the negative electrode active material, a compound capable of reversible intercalation and deintercalation of lithium may be used. Specific examples include carbonaceous materials such as artificial graphite, natural graphite, graphitized carbon fiber, and amorphous carbon; metallic compounds capable of alloying with lithium, such as Si, Al, Sn, Pb, Zn, Bi, In, Mg, Ga, Cd, Si alloy, Sn alloy, and Al alloy; metal oxides capable of doping and dedoping lithium, such as SiOₐ (0<a<2), SnO₂, vanadium oxide, and lithium vanadium oxide; or composites containing the metallic compound and carbonaceous material, such as a Si-C composite and Sn-C composite, and any one or a mixture of two or more thereof may be used. In addition, a metallic lithium thin film may be used as the negative electrode active material. In addition, the carbon material may be both low-crystalline carbon and high-crystalline carbon. Representative examples of the low-crystallization carbon include soft carbon and hard carbon, and representative examples of the high-crystallization carbon include amorphous, plate-like, flaky, spherical or fiber-like natural or artificial graphite, Kish graphite, pyrolytic carbon, mesophase pitch-based carbon fiber, mesocarbon microbeads, mesophase pitches, and high-temperature heat-treated carbon such as petroleum or coal tar pitch derived cokes.

The negative electrode active material may be included in 80 wt% to 99 wt%, 82 wt% to 99 wt%, or 84 wt% to 99 wt% based on the total weight of the negative electrode active material layer.

The binder is a component that assists in bonding among the conductive material, the active material, and the current collector, and is typically added in an amount of 0.1 to 10 wt% based on the total weight of the negative electrode active material layer. Examples of such binder include polyvinylidene fluoride (PVDF), polyvinyl alcohol, carboxymethyl cellulose (CMC), starch, hydroxypropyl cellulose, regenerated cellulose, polyvinyl pyrrolidone, polytetrafluoroethylene, polyethylene, polypropylene, an ethylene-propylene-diene polymer (EPDM), a sulfonated-EPDM, styrene-butadiene rubber, nitrile-butadiene rubber, fluoro-rubber, and various copolymers thereof.

The conductive material is a component for further improving the conductivity of the negative electrode active material, and may be included in 1 wt% to 30 wt%, 1 wt% to 20 wt%, or 1 wt% to 10 wt% based on the total weight of the negative electrode active material layer. The conductive material is not particularly limited as long as it has conductivity without causing chemical changes in the battery, and for example, graphite such as natural graphite and artificial graphite; carbon black such as acetylene black, Ketjen black, channel black, furnace black, lamp black, and thermal black; conductive fibers such as carbon fibers and metal fibers; fluorinated carbon; metal powders such as aluminum and nickel powders; conductive whiskers of zinc oxide, potassium titanate or the like; conductive metal oxides such as titanium oxide; conductive materials such as polyphenylene derivatives, or the like may be used.

The negative electrode active material layer may be manufactured by applying and drying a negative electrode slurry composition prepared by dissolving or dispersing a negative electrode active material, and optionally a binder and a conductive material in a solvent, on a negative electrode current collector, or by casting the negative electrode slurry composition on a separate support, and then laminating the obtained film by peeling it off from the support on a negative electrode current collector.

In addition, the lithium secondary battery may optionally further include a battery container that accommodates the electrode assembly of the positive electrode, the separator, and the negative electrode, and a sealing member that seals the battery container.

In addition, since the lithium secondary battery according to the present invention stably exhibits excellent discharge capacity, output characteristics, and capacity retention, it is useful in portable devices such as a mobile phone, a laptop computer, and a digital camera, and electric vehicles such as a hybrid electric vehicle (HEV).

In particular, in order to use the battery for a longer period of time with a single battery charge, it is necessary to increase battery capacity, and large-area electrode technology is essential for high capacity. However, in the process of increasing the electrode area, the performance of the electrode may decrease, and there is concern about thermal propagation due to thermal runaway to other electrodes in case of fire.

Accordingly, according to another embodiment of the present invention, a battery module including a plurality of the lithium secondary batteries and a battery pack including a plurality of the battery modules are provided.

The battery module refers to a battery assembly in which a certain number of lithium secondary batteries are bundled and placed in a frame to protect them from external impact, heat, vibration or the like. The battery pack refers to the final form of a battery system installed in an electric vehicle or the like.

The battery module or battery pack may be used as a power source for one or more medium- to large-sized devices, including power tools; electric cars including electric vehicles (EVs), hybrid electric vehicles, and plug-in hybrid electric vehicles (PHEVs); or power storage systems.

The battery module and battery pack according to the present invention, if including a plurality of the electrode current collectors described above, maximize safety against thermal propagation in case of actual fire, thereby enabling high capacity and large area of the battery to be realized.

Hereinafter, embodiments of the present invention will be explained in detail to particularly explain the present invention to a person skilled in the art. However, the present invention may be modified into various other types and should not be interpreted to be limited to the embodiments below.

### Examples and Comparative Examples

### Example 1

An electrode current collector was manufactured by forming a first metal layer and a second metal layer by the physical vapor deposition (PVD) of an aluminum metal to a thickness of 1 µm on both sides of polyethylene terephthalate (PET) containing 30 wt% of lead oxide (PbO) having an average particle diameter of 0.5 µm based on the total weight, and having a thickness of 6 µm.

### Example 2

An electrode current collector was manufactured by forming a first metal layer and a second metal layer by the physical vapor deposition (PVD) of an aluminum metal to a thickness of 1 µm on both sides of polyethylene terephthalate (PET) containing 50 wt% of bismuth ruthenic acid (Bi₂Ru₂O₇) having an average particle diameter of 0.5 µm based on the total weight, and having a thickness of 10 µm.

### Example 3

An electrode current collector was manufactured by the same method as in Example 1 except for containing 30 wt% of ruthenium dioxide (RuO₂) having an average particle diameter of 1.0 µm, based on the total weight instead of lead oxide (PbO) having an average particle diameter of 0.5 µm.

### Comparative Example 1

An aluminum metal with a thickness of 12 µm was used as an electrode current collector.

### Comparative Example 2

An electrode current collector was manufactured by forming a first metal layer and a second metal layer by the physically vapor deposition (PVD) of an aluminum metal to a thickness of 1 µm on both sides of polyethylene terephthalate (PET) having a thickness of 6 µm and not containing a metal oxide.

### Comparative Example 3

An electrode current collector was manufactured by the same method as in Example 1 except for using polyethylene terephthalate (PET) having a thickness of 2 µm and an aluminum metal having a thickness of 3 µm.

### Comparative Example 4

An electrode current collector was manufactured by the same method as in Example 1 except for using polyethylene terephthalate (PET) having a thickness of 40 µm and an aluminum metal having a thickness of 1.5 µm.

### Comparative Example 5

An electrode current collector was manufactured by the same method as in Example 1 except for using polyethylene terephthalate (PET) having a thickness of 8 µm and an aluminum metal having a thickness of 5 µm.

### Comparative Example 6

An electrode current collector was manufactured by the same method as in Example 1 except for including 30 wt% of carbon black having an average particle diameter of 1.0 µm, based on the total weight instead of lead oxide (PbO) having an average particle diameter of 0.5 µm.

### Comparative Example 7

An electrode current collector was manufactured by the same method as in Example 1 except for including 30 wt% of an aluminum metal powder having an average particle diameter of 1.0 µm, based on the total weight instead of lead oxide (PbO) having an average particle diameter of 0.5 µm.

### Experimental Example 1

The resistance characteristics and safety of lithium secondary batteries manufactured using the electrode current collectors manufactured in Examples 1 to 3 and Comparative Examples 1 to 7 were evaluated through 1) electrical resistivity, 2) thermal propagation delay test, 3) nail penetration test, and 4) weldability test, and the results are shown in Table 1 below. In this case, in Table 1, the "⊚" mark means very good, the "o" mark means good, the "△" mark means average, and the "X" mark means poor.

### Lithium Secondary Battery Manufacture

A positive electrode slurry was prepared by mixing a positive electrode active material (NCM65 1520), a conductive material (Li-435), and a PVDF binder (KF9700, AD-c01) in a weight ratio of 96.5:1.5:2.0 in N-methylpyrrolidone.

The positive electrode slurry was applied to one side of the electrode current collector manufactured in each of Examples 1 to 3 and Comparative Examples 1 to 7, and then dried at 140°C and rolled to manufacture a positive electrode.

A negative electrode active material used graphite, and a negative electrode slurry containing the graphite, a binder and a conductive material was applied to a copper foil and dried to manufacture a negative electrode.

An electrode assembly was manufactured by interposing a separator between the positive and negative electrodes manufactured by the above-described methods, and then the assembly was placed inside a battery case, and an electrolyte was injected into the case to manufacture a battery cell. The electrolyte was prepared by dissolving 0.7 M LiPF₆ in a mixed organic solvent in a volume ratio of ethylene carbonate (EC): propylene carbonate (PC): ethyl methyl carbonate (EMC) = 2:1:7.

Specifically, the experimental methods for 1) electrical resistivity, 2) time delay effect on thermal propagation, 3) safety from nail penetration and 4) weldability are as follows.
1) Electrical resistivity: The surface resistance of the electrode current collectors manufactured in the Examples and Comparative Examples, was measured using a 4-point probe device, and evaluated in 4 stages.
2) Thermal propagation delay test: Five of the manufactured battery cells were made into one module, and heat was applied to one battery cell at a rate of 0.5°C/sec using a heating pad. The heat to an adjacent cell was measured using a thermocouple to determine the degree of time delay for thermal propagation, and evaluated in four stages.
3) Penetration test: The manufactured battery cell was penetrated at a speed of 0.1 mm/s using a sharp nail type to conduct a nail penetration test. If it ignited, it was evaluated as X, and if not, it was evaluated as ∘.
4) Weldability test: After stacking 10 electrode current collectors manufactured in the Examples and Comparative Examples, welding was performed. If any of the welded electrode current collectors was separated or a pin hole with a diameter of about 3 mm or more occurred, it was evaluated as X. If there was no separation but a crack or a pin hole with a diameter of less than about 3 mm, it was evaluated as △. If no crack, pin hole, or separation occurred, it was evaluated as o or ⊚. o and ⊚ indicate different evaluations depending on the level of strength.

**[Table 1]**

| | Electrical resistivity | Thermal propagation delay test | Penetration test | Weldability test |
|---|---|---|---|---|
| Example 1 | Δ | ○ | ○ | ○ |
| Example 2 | Δ | ○ | ○ | ○ |
| Example 3 | Δ | ○ | ○ | ○ |
| Comparative Example 1 | ⊚ | X | X | ⊚ |
| Comparative Example 2 | X | ○ | ○ | X |
| Comparative Example 3 | ○ | X | X | ○ |
| Comparative Example 4 | X | ⊚ | ○ | X |
| Comparative Example 5 | ○ | X | X | Δ |
| Comparative Example 6 | ○ | ○ | ○ | X |
| Comparative Example 7 | ○ | X | X | ○ |

Referring to Table 1 above, in the cases of Examples 1 to 3, which used a current collector in which a resin layer as a metalized film was disposed between metal layers, it can be confirmed that the electrical resistivity was improved, while showing excellent results in the thermal propagation delay and penetration tests, and that the weldability was also excellent compared to Comparative Example 2. On the other hand, in the cases of Comparative Examples 1 to 7, it can be confirmed that if the electrical characteristics and/or weldability were excellent, the safety evaluation results were considerably poor level, and if the safety was secured to some extent, the electrical characteristics and weldability were evaluated as poor.

Specifically, if examining the conventional aluminum foil as in Comparative Example 1, or Comparative Example 3 in which the metal layer was thicker than the resin layer because the thickness ratio was smaller than 1, Comparative Example 5 in which the resin layer was thicker than the metal layer so that the thickness ratio exceeded 1 but the metal layer exceeded 3 µm, and Comparative Example 7 in which a metal powder was added to the resin layer, it can be confirmed that there is no improvement in terms of safety like the conventional aluminum current collector. In addition, in the cases of Comparative Examples 2 and 4, in which the resin layer was too thick or did not contain a metal oxide, it can be confirmed that although safety may be secured because the resistivity characteristics were not improved, there was a problem in that a great loss in output performance was exhibited.

### [Description of symbols]

11: Resin layer
11a: First resin layer
11b: Second resin layer
11c: Third resin layer
12: First metal layer
13: Second metal layer
14: Metal oxide

## Claims

1. An electrode current collector comprising:
a resin layer;
a first metal layer disposed on one side of the resin layer; and
a second metal layer disposed on the other side of the resin layer, wherein
each of the first metal layer and the second metal layer independently has a thickness of 3.0 µm or less,
a ratio (T_{R}/T_{M}) of a thickness (T_{R}) of the resin layer to a thickness (T_{M}) of the first metal layer or the second metal layer is from 1 to 24, and
the resin layer comprises a metal oxide represented by the following Formula 1:
[Formula 1] M1ₓM2_{y}O_{z}
in Formula 1, M1 is one or more post-transition metals selected from the group consisting of Al, Ga, In, Sn, Pb, and Bi, M2 is one or more transition metals selected from the group consisting of Ti, Zr, Nb, Ru, Hf, Cr, Mo, Ni, Co, V, Y, and Zn, 0≤x≤4, 0≤y≤4 and 1≤z≤8, x and y are not 0 at the same time, and x, y and z are defined considering oxidation numbers of M1 and M2 and an oxidation number of oxygen.

2. The electrode current collector according to claim 1, wherein the metal oxide comprises one or more selected from the group consisting of lead oxide (PbO), ruthenium dioxide (RuO₂), alumina (Al₂O₃), zirconia (ZrO₂), bismuth ruthenic acid (Bi₂Ru₂O₇), and bismuth iridic acid (Bi₂Ir₂O₇).

3. The electrode current collector according to claim 1, wherein the metal oxide is from 10 wt% to 60 wt% based on a total weight of the resin layer.

4. The electrode current collector according to claim 1, wherein the metal oxide has an average particle diameter of from 0.5 µm to 2.0 µm.

5. The electrode current collector according to claim 1, wherein the resin layer further comprises one or more selected from the group consisting of a polyester-based resin, an epoxy-based resin, a phenol-based resin, a melamine-based resin, an urethane-based resin, a silicone-based resin, a vinyl acetate-based resin, a rubber-based resin, an acrylic resin, and a polyether urethane-based resin.

6. The electrode current collector according to claim 1, wherein each of the first metal layer and the second metal layer independently comprises one or more selected from the group consisting of copper, stainless steel, aluminum, nickel, titanium, heat-treated carbon, and an aluminum-cadmium alloy.

7. The electrode current collector according to claim 1, wherein the resin layer has a thickness of from 2 µm to 12 µm.

8. The electrode current collector according to claim 1, wherein each of the first metal layer and the second metal layer independently has a thickness of from 0.2 µm to 2.5 µm.

9. The electrode current collector according to claim 1, wherein the resin layer has a thickness deviation of 10% or less.

10. The electrode current collector according to claim 1, wherein each of the first metal layer and the second metal layer independently has a thickness deviation of 5% or less.

11. A lithium secondary battery comprising an electrode assembly having a structure in which multiple electrodes and multiple separators are alternately laminated,
wherein the electrode comprises an electrode current collector and an electrode active material layer disposed on the electrode current collector, and
at least one of the multiple electrode current collectors is the electrode current collector according to claim 1.

12. A battery module comprising a plurality of the lithium secondary battery according to claim 11.
